# EUROPEAN PATENT SPECIFICATION

(11) **EP 1 479 603 B1**
(45) Date of publication and mention of the grant of the patent: **03.07.2019**
(21) Application number: 04011944.8
(22) Date of filing: 19.05.2004
(51) Int. Cl.: B62K 11/10, B62M 7/12, F02M 35/16, F02M 35/02, F02M 35/10

(54) **Air intake structure for an engine of a motorcycle and motorcycle comprising an air intake structure**
Struktur des Lufteinlasses für Motorradmotor und Motorrad mit einer Struktur des Lufteinlasses
Structure de prise d'air pour moteur de motocyclette et motocyclette avec une structure de prise d'air

(30) Priority: 20.05.2003 CN 03123718
(43) Date of publication of application: 24.11.2004
(73) Proprietor: Yamaha Hatsudoki Kabushiki Kaisha, Iwata-shi, Shizuoka-ken (JP)
(72) Inventor: Su, Chen-Jui, Chunli (TW); Tsai, Kuan-Chuan, Chunli (TW)
(74) Representative: Grünecker Patent- und Rechtsanwälte PartG mbB

(56) References cited:
- ES-A1- 8 401 590
- FR-A- 2 714 354
- JP-A- 7 101 371
- JP-A- 60 174 323
- JP-A- 2001 063 665
- US-A- 4 733 639

## Description

The present invention relates to to a motorcycle according to the preamble of independent claim 1. Such a motorcycle can be taken from the prior art document JP 2001-063665 A. Said motorcycle is provided with a transmission case which accommodates a transmission arranged between the engine and the rear wheel. A cushion unit is attached to the most rearward end of said transmission case with one side thereof, while the opposing side of the cushion unit is attached to the rear of the body frame, so that said cushion unit is in an upright position. The air cleaner case is supported on said transmission case and arranged in front of the cushion unit and spaced apart therefrom, so that the cushion unit does not abut against the air cleaner case even if the rear wheel moves in an up and down direction.

The engine of a motorcycle is called the heart of the cycle as it provides power. The engine of a motorcycle requires air for combustion. However, there are impurities such as steams and dusts in the air that may affect the combustion efficiency of the engine, or even cause damages to it. Therefore, an air cleaner is always provided in the air intake structure of the engine of a motorcycle to clean out the impurities in the air before the cleaned air is guided into the engine of the motorcycle for combustion.

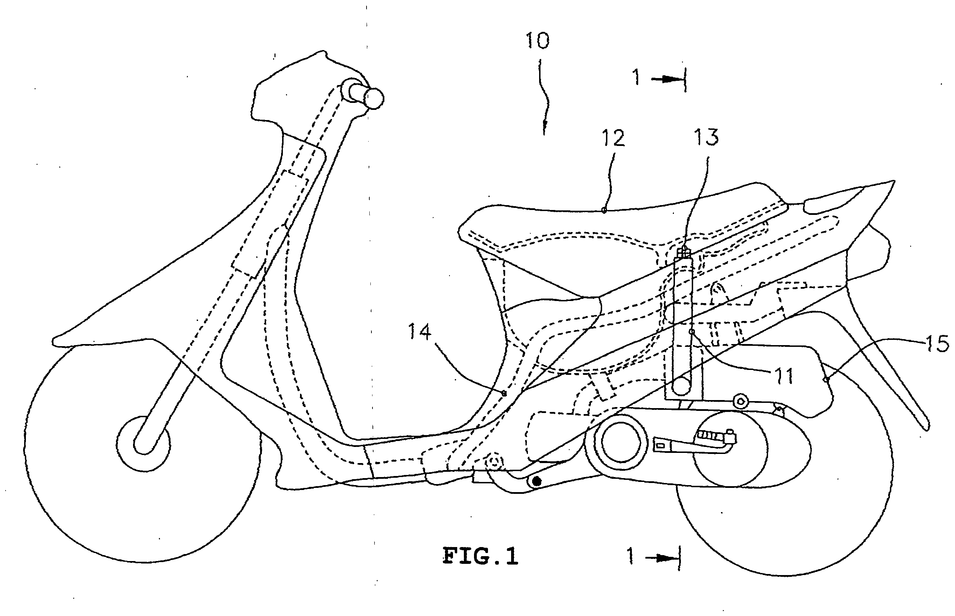

In the Japanese Unexamined Patent Publication No. Hei 7-101371, the air intake structure of the engine of a motorcycle is disclosed, the configuration of which is illustrated in Figure 1. An intake pipe 11 is mounted vertically under the seat 12 of a motorcycle 10. The intake port 13 is covered by the seat 12, while its bottom is connected to an air cleaner 15 so as to clean the intake air from the intake port 13. In addition, the intake pipe 11 is on one side of a longitudinal body frame 14 of the motorcycle 10 to save up more space and to avoid interferences between the components.

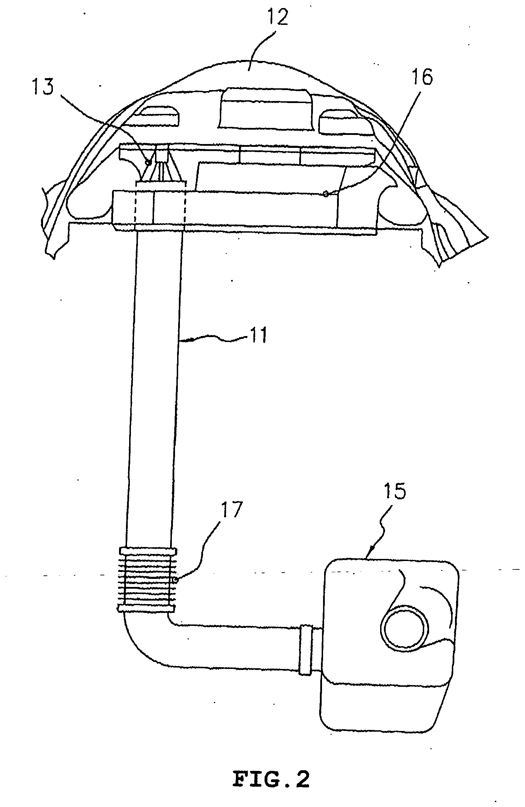

Figure 2 is the cross sectional view of Figure 1 along the line 1-1. The upper end of the intake pipe 11 runs through and is fastened to an upper cover 16 so that the intake port 13 protrudes above the upper cover 16. The bottom of the intake pipe 11 is connected to the air cleaner 15. When the motorcycle is running, the upper cover 16 and the air cleaner 15 will have relative displacement because of the jumping of the motorcycle on the road and the vibration of the cycle itself. Therefore, in the intake pipe 11, a deformable bellows pipe 17 is provided as a cushion to prevent the deformation of the said connecting components.

The above design has the protrusion of the intake port 13 above the upper cover 16 and is only covered by the seat 12. Therefore steams and dusts are easily taken in to affect the combustion efficiency of the engine and even to shorten the service life of the engine. In addition, as the buffer structure or the bellows pipe 17 has to be mounted to the intake pipe 11, the cost for production is high and the requirements on assembly are complicated.

It is an object of the present invention to provide a motorcycle as indicated above having a compact structure and high performance of the air intake structure.

According to the present invention, said objective is solved by a motorcycle having the features of independent claim 1. Preferred embodiments are laid down in the dependent claims.

Preferably, it is provided a motorcycle further comprises a shield member forming a half-enclosed space which opens in a substantially downward direction of the motorcycle, wherein an inlet opening of an upwardly extending intake pipe of the intake structure is positioned substantially inside the half-enclosed space.

Preferably, the air intake structure further comprises a drainage port being mounted to a bottom part of the intake chamber. Therein, said intake chamber comprises an oblique plane, preferably at an upper side thereof, to which a first end of the intake pipe is connected in a substantially vertical direction.

Further preferably, said intake pipe forms an inclination with the ground between 50° to 70°. Therein, a second end of said intake pipe includes an inlet opening that faces to a side of the air intake structure, said inlet opening having an oval shape, a longer diameter section thereof being substantially parallel to the oblique plane.

Further still preferably, the air intake structure further comprises a partition wall separating said intake chamber from said outlet chamber and/or an air filter being provided between said intake pipe and said connecting pipe, preferably being positioned between said intake chamber and said outlet chamber.

Preferably, the shield member is positioned below the body frame and/or the seat. Therein, the motorcycle further comprising a side cover located below the seat, wherein the shield member includes a side opening that faces the side cover and the side cover covers the side opening to form the half-enclosed space.

Further, the intake pipe may be freely movable with regard to the body frame of the motorcycle.

Still preferably, said shield member includes at least one fastening rib for fastening the shield member to the body frame and/or in that said shield member is made of rubber. Therein, said shield member is integrally formed on the side cover or in that said shield member is mounted to the side cover after it is formed separately from the side cover.

Further preferably, a space is provided between an upper end of the intake pipe and a top wall of the shield member, large enough to prevent any direct contact therebetween caused by vibrations or shocks generated during a running of the motorcycle.

By providing such an improved motorcycle and such an improved air intake structure for the engine of the motorcycle, it is achieved that its intake pipe allows the relative displacement generated between the body frame and other components to cope with the vibration caused when the motorcycle is running. The invention can simplify the designs of the components to lower the cost of production, to avoid effectively the intrusion of steams and dusts into the engine of a motorcycle and thus to optimize the service efficiency and life of the engine.

Further preferred embodiments are subject to the subclaims.

In the following, the invention will be described in greater detail by means of embodiments thereof with reference to the accompanying drawings, wherein:
Figs. 1 and 2 indicate the configuration mode of the air intake structure of the engine of a conventional motorcycle;
Figs. 3, 4 and 5 are respectively the block diagram, right lateral view and plan view of the air intake structure of the engine of a motorcycle according to the present teaching;
Fig. 6 is the cross sectional view of Figure 4 along the line 2-2;
Fig. 7 indicates the state when the air intake structure of the engine is mounted to the motorcycle;
Fig. 8 is the illustration of the shield member of the air intake structure according to a first embodiment;
Fig. 9 is the illustration of the shield member from other angle;
Fig. 10 is an illustration of the shield member of the air intake structure according to another embodiment; and
Fig. 11 is a further illustration of the shield member of the air intake structure according to still another embodiment.

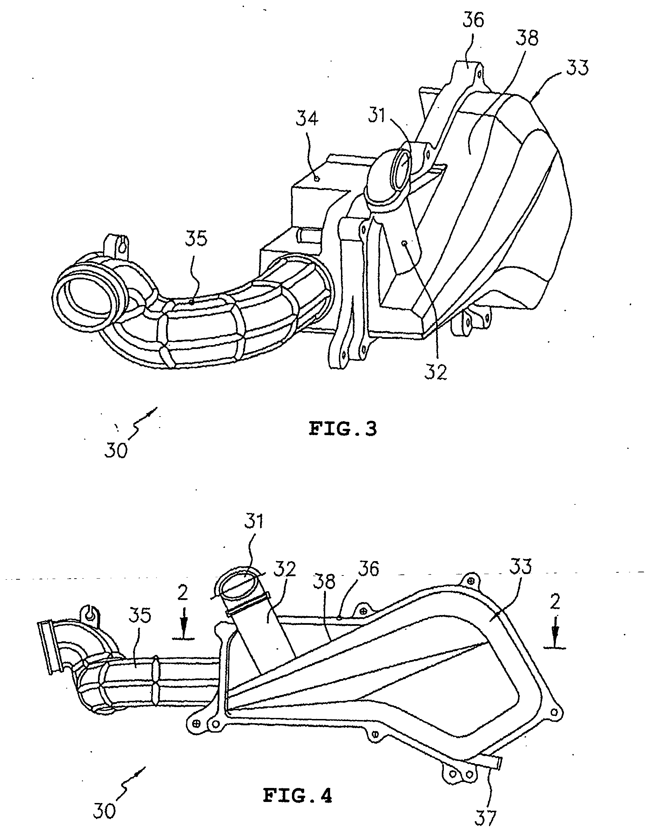

Figures 3, 4 and 5 are respectively the block diagram, right lateral view and plan view of the air intake structure of the engine of a motorcycle according to the present teaching.

The basic structure of the motorcycle corresponds to the one described before according to Figs. 1 and 2, as far as not described differently in the following.

The air intake structure 30 of the engine of the motorcycle is in fact an air cleaner provided with an intake pipe 32, an intake chamber 33, an outlet chamber 34, a connecting pipe 35, a partition wall 36 and a drainage port 37. The opening 31 of the intake pipe 32 opens to a side to prevent any impurities to be dropped in the intake pipe 32 because of gravity. The bottom of the intake pipe 32 is roughly vertically connected to the oblique plane 38 of the intake chamber 33 so as to guide the air into the intake chamber 33. The drainage port 37 is on the bottom of the intake chamber 33 to drain the moisture coagulated in the air. The partition wall 36 is between the intake chamber 33 and the outlet chamber 34 to separate the two. The connecting pipe 35 is connected to the front end of the outlet chamber 34 to provide the cleaned air into the engine.

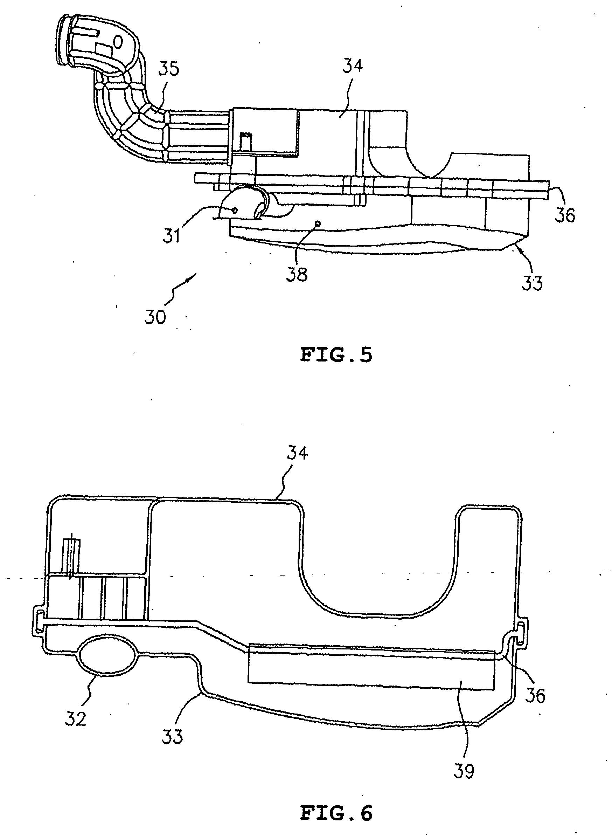

Figure 6 is the cross sectional view of Figure 4 along the line 2-2. The partition wall 36 is integrated with an air cleaner 39 which is disposed between the intake chamber 33 and the outlet chamber 34 to clean the air in the intake chamber 33. The air flows in the route from the intake pipe 32 into the intake chamber 33, is provided to the outlet chamber 34 after it has cleaned by the air cleaner 39, and is provided to the engine through the connecting pipe 35 as illustrated in Figures 3 and 5.

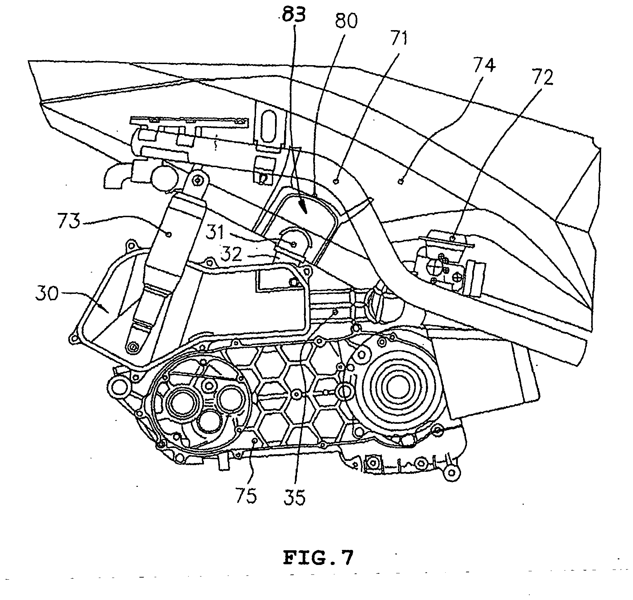

Figure 7 indicates the state when the air intake structure of the engine as described above is mounted to a motorcycle, preferably being of the scooter type. It is a view from inside the motorcycle to outside. The right side is the direction of the head of the motorcycle, while the left is the rear part of it. To make it easy to understand, Figure 7 only displays some of the parts in the motorcycle that relate with this invention. The air intake structure 30 of the engine of the motorcycle is mounted to the gear case 75 of the motorcycle, and its side is connected to a shock absorber 73. One end of the connecting pipe 35 is connected to the engine 72 to provide the air required by the engine 72. The opening 31 is under the body frame 71 and is not fastened. A shield member 80 is fastened to the body frame 71 and can form a half-enclosed space with the side cover 74 so that the opening 31 can be covered inside it to prevent the intrusion of steams and dusts. In addition, the intake pipe 32 bends towards the head of the motorcycle and forms an inclination with the ground between 50° to 70°. The bending design can make the intake pipe 32 to be roughly vertical to the designed vibration center of the motorcycle so that the stability of the whole structure is increased.

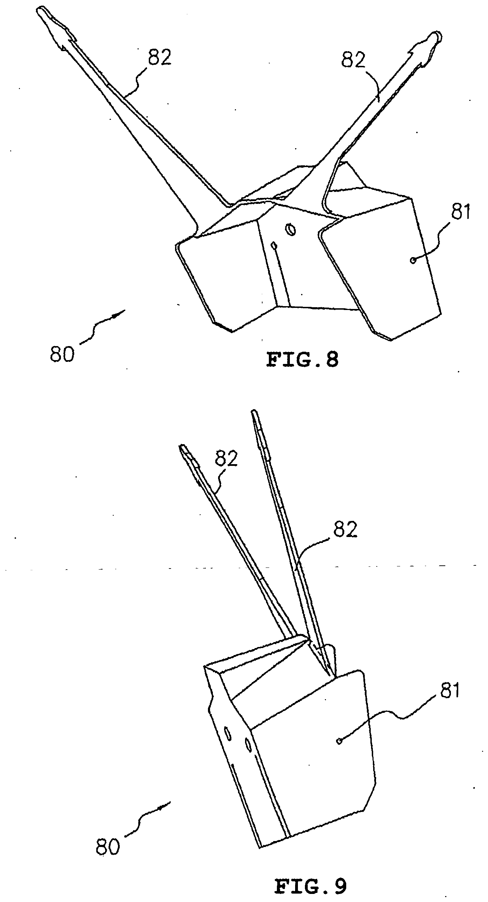

Figures 8 and 9 are block diagrams of the shield member 80 from different angles. The shield member 80 includes a cover 81 and two fastening ribs 82 that can be made of rubber. An opening is formed from under the cover 81 and near the side of the fastening ribs 82 while the fastening ribs 82 can be bent and fastened around the body frame 71 in Figure 7. In fact, after the shield member 80 is mounted to the body frame 71, the side of the shield member 80 originally opened is also covered by the side cover 74 in Figure 7, so that a half-enclosed space 83 opening roughly downward is formed.

The opening 31 of the intake pipe 32 of this embodiment is inside the half-enclosed space 83 formed from the shield member 80 and the side cover 74. Therefore, compared to the design of an opening that protrudes the cover, it can optimize the effect to separate steams and dusts. In addition, because the opening 31 of the intake pipe 32 has the suspending design, there is a space with the top of the half-enclosed space. So the relative displacement between the body frame. 71 and the shield member 80 allows eliminating the needs of the existing bellows pipe design. The size of the shield member 80 has to be designed according to the movements of the intake pipe 32 caused during the running of the motorcycle to avoid collisions between the components. Besides, as the opening 31 of the intake pipe 32 does not require any fastening, the assembly process can be simplified.

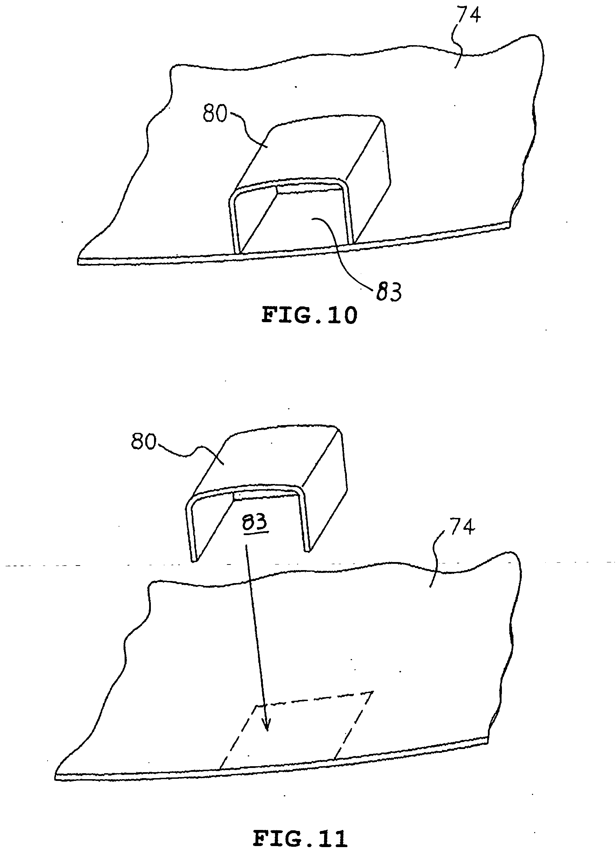

Figure 10 is a further illustration of the shield member 80 of the air intake structure of the engine of a motorcycle according to a second embodiment. Accordingly, it is also feasible that the shield member 80 is not structured as fastened to the body frame 71 by the fastening ribs 82 but can also be structured integrally on the side cover 74. Thus, a half-enclosed space 83 that opens roughly downwards will be formed.

Figure 11 is a further illustration of the shield member 80 of the air intake structure of the engine of a motorcycle according to a third embodiment. It is also feasible that after the shield member 80 and the side cover 74 take shape respectively, the shield member 80 is mounted to the side cover 74. After the shield member 80 is mounted to the body frame 71, the side of the shield member 80 originally opened is covered by the side cover 74 and forms a half-enclosed space 83 the roughly opens downward.

Above, the air intake structure of the engine of a motorcycle and the motorcycle to which such an air intake structure is mounted is described. Therein preferably, the air intake structure of the engine of the motorcycle includes a shield member and an air cleaner. The shield member is under a body frame of the motorcycle which extends longitudinally along the body of the motorcycle, and forms a half-enclosed space, the opening of which opens downward to prevent the entering of any impurities in the air. The air cleaner includes an intake pipe, the opening of which is inside the half-enclosed space. In addition, the intake pipe allows relative displacement to the body frame so that it is allowed that the intake pipe moves within the half-enclosed space so as to cope with the relative displacement of the components when the motorcycle jumps from the surface of the road or vibrates by itself.

In other words, the present teaching relates to the air intake structure of the engine of a motorcycle and a motorcycle that has an engine of such an air intake structure. More particularly, it relates to the air intake structure of the engine of a motorcycle that includes an air cleaner and a motorcycle that has such an air intake structure.

As explained above, the motorcycle preferably includes a body frame and an air intake structure of the engine. The body frame extends longitudinally along the body of the motorcycle. The air intake structure of the engine includes a shield member and an air cleaner. The shield member is under the body frame and can form a half-enclosed space that opens roughly downwards to prevent the impurities in the air from entering. The air cleaner also includes an intake pipe, the opening of which is inside the half-enclosed space. The intake pipe allows the relative displacement generated between itself and the body frame.

The shield member can be a component that includes a side opening which faces the side cover of the motorcycle. The side opening of the shield member may be covered with the side cover to form the half-enclosed space.

In terms of the specific structures, the air cleaner also includes an intake chamber, an outlet chamber, a connecting pipe, an intake pipe, a partition wall and an air filter. The opening of the intake pipe is under the body frame and its bottom is connected to the intake chamber. The intake pipe allows the relative displacement generated between itself and the body frame. One end of the connecting pipe is connected to the outlet chamber while the other end is connected to the engine of the motorcycle. The partition wall is mounted between the intake chamber and the outlet chamber to separate the two. The air filter can also be mounted between the intake chamber and the outlet chamber to clean the air in the intake chamber and provide it to the outlet chamber. Besides, there can be another drainage port on the bottom of the intake chamber to drain the moisture coagulated in the air.

As the intake pipe is of a suspension type design that allows the relative displacement generated between itself and the body frame, i.e. the intake pipe is allowed to move within the half-enclosed space, the traditional design of the bellows pipe can be unnecessary. In addition, as the opening of the intake pipe does not need to be fastened, the assembly process also becomes simpler.

## Claims

1. Motorcycle to be operated on a ground comprising a seat (12), an engine (72), a gear case (75), a body frame (71) which extends longitudinally along the body of the motorcycle, a shock absorber (73), and an air intake structure (30) for the engine (72), said air intake structure (30) is mounted on the gear case (75) and comprises:
an intake chamber (33);
an outlet chamber (34);
a connecting pipe (35), one end thereof being connected to the outlet chamber (34), the other end thereof being connectable to the engine (72);
and an intake pipe (32), wherein the intake pipe (32) is tilted towards the connecting pipe (35), **characterized in that**
a side of the air intake structure (30) is connected to the shock absorber (73).

2. Motorcycle according to claim 1, **characterized by** a drainage port (37) being mounted to a bottom part of the intake chamber (33).

3. Motorcycle according to claim 1 or 2, **characterized in that** said intake chamber (33) comprises an oblique plane (38), preferably at an upper side thereof, to which a first end of the intake pipe (32) is connected in a substantially vertical direction.

4. Motorcycle according to at least one of the claims 1 to 3, **characterized in that** said intake pipe (32) forms an inclination with the ground between 50° to 70°.

5. Motorcycle according to at least one of the claims 1 to 4, **characterized in that** at a second end of said intake pipe (32) includes an inlet opening (31) that faces to a side of the air intake structure (30).

6. Motorcycle according to claim 5, **characterized in that** said inlet opening (31) has an oval shape, a longer diameter section thereof being substantially parallel to the oblique plane (38).

7. Motorcycle according to at least one of the claims 1 to 6, **characterized by** a partition wall (36) separating said intake chamber (33) from said outlet chamber (34) and/or an air filter (39) being provided between said intake pipe (32) and said connecting pipe (35), preferably being positioned between said intake chamber (33) and said outlet chamber (34).

8. Motorcycle according to at least one of the claims 1 to 7, **characterized by** a shield member (80) forming a half-enclosed space (83) which opens in a substantially downward direction of the motorcycle, wherein an inlet opening (31) of an upwardly extending intake pipe (32) of the intake structure (30) is positioned substantially inside the half-enclosed space (85).

9. Motorcycle according to claim 8, **characterized in that** the shield member (80) is positioned below the body frame (71) and/or the seat (12).

10. Motorcycle according to claim 8 or 9, **characterized by** a side cover (74) located below the seat (12), wherein the shield member (80) includes a side opening that faces the side cover (74) and the side cover (74) covers the side opening to form the half-enclosed space (83).

11. Motorcycle according to at least one of the claims 8 to 10, **characterized in that** said shield member (80) includes at least one fastening rib (82) for fastening the shield member (80) to the body frame (71) and/or **in that** said shield member (80) is made of rubber.

12. Motorcycle according to at least one of the claims 8 to 11, **characterized in that** said shield member (80) is integrally formed on the side cover (74) or **in that** said shield member (80) is mounted to the side cover (74) after it is formed separately from the side cover (74).

13. Motorcycle according to at least one of the claims 8 to 12, **characterized in that** a space is provided between an upper end of the intake pipe (32) and a top wall of the shield member (80), large enough to prevent any direct contact therebetween caused by vibrations or shocks generated during a running of the motorcycle.

14. Motorcycle according to at least one of the claims 1 to 13, **characterized in that** the intake pipe (32) is freely movable with regard to the body frame (71) of the motorcycle.

## Patentansprüche

1. Motorrad, das in einem Boden zu betreiben ist, umfasst einen Sitz (12), einen Motor (72), ein Getriebe-Gehäuse (75), einen Körper-Rahmen (71), der sich längs entlang dem Körper des Motorrads erstreckt, einen Stoß-Dämpfer (73), und eine Luft-Einlass-Struktur (30) für den Motor (72), diese Luft-Einlass-Struktur (30) ist an dem Getriebe-Gehäuse (75) montiert und umfasst:
eine Einlass-Kammer (33);
eine Auslass-Kammer (34);
eine Verbindungs-Leitung (35), ein Ende derselben ist mit der Auslass-Kammer (34) verbunden, das andere Ende derselben ist mit dem Motor (72) verbindbar;
und eine Einlass-Leitung (32), wobei die Einlass-Leitung (32) zu der Verbindungs-Leitung (35) geneigt ist, **dadurch gekennzeichnet, dass**
eine Seite der Luft-Einlass-Struktur (30) mit dem Stoß-Dämpfer (73) verbunden ist.

2. Motorrad gemäß Anspruch 1, **gekennzeichnet durch** einen Ablass-Anschluss (37), der an einem Boden-Teil der Einlass-Kammer (33) montiert ist.

3. Motorrad gemäß Anspruch 1 oder 2, **dadurch gekennzeichnet, dass** diese Einlass-Kammer (33) eine schräge Ebene (38) umfasst, vorzugsweise an einer oberen Seite derselben, zu der ein erstes Ende der Einlass-Leitung (32) in einer im Wesentlichen vertikalen Richtung verbunden ist.

4. Motorrad gemäß zumindest einem der Ansprüche 1 bis 3, **dadurch gekennzeichnet, dass** diese Einlass-Leitung (32) eine Neigung mit dem Boden zwischen 50° bis 70° bildet.

5. Motorrad gemäß zumindest einem der Ansprüche 1 bis 4, **dadurch gekennzeichnet, dass** ein zweites Ende von dieser Einlass-Leitung (32) eine Einlass-Öffnung (31) beinhaltet, die einer Seite der Luft-Einlass-Struktur (30) zugewandt ist.

6. Motorrad gemäß Anspruch 5, **dadurch gekennzeichnet, dass** diese Einlass-Öffnung (31) eine ovale Form hat, einen Lang-Durchmesser-Abschnitt derselben ist im Wesentlichen parallel zu der schrägen Ebene (38).

7. Motorrad gemäß zumindest einem der Ansprüche 1 bis 6, **gekennzeichnet durch** eine Abteilungs-Wand (36), welche diese Einlass-Kammer (33) von dieser Auslass-Kammer (34) separiert und/oder einen Luft-Filter (39), der zwischen dieser Einlass-Leitung (32) und dieser Verbindungs-Leitung (35) vorgesehen ist, vorzugsweise positioniert zwischen dieser Einlass-Kammer (36) und dieser Auslass-Kammer (34).

8. Motorrad gemäß zumindest einem der Ansprüche 1 bis 7, **gekennzeichnet durch** ein Abschirm-Element (80), das einen halb eingeschlossenen Raum (83) bildet, der in eine im Wesentlichen Nach-Unten-Richtung des Motorrads öffnet, wobei eine Einlass-Öffnung (31) von einer nach-oben-erstreckenden Einlass-Leitung (32) der Einlass-Struktur (30) im Wesentlichen innerhalb des halb eingeschlossenen Raums (85) positioniert ist.

9. Motorrad gemäß Anspruch 8, **dadurch gekennzeichnet, dass** das Abschirm-Element (80) unterhalb des Körper-Rahmens (71) und/oder des Sitzes (12) positioniert ist.

10. Motorrad gemäß Anspruch 8 oder 9, **gekennzeichnet durch** eine Seiten-Abdeckung (74), die unterhalb des Sitzes (12) angeordnet ist, wobei das Abschirm-Element (80) eine Seiten-Öffnung beinhaltet, welche der Seiten-Abdeckung (74) zugewandt ist, und die Seiten-Abdeckung (74) deckt die Seiten-Öffnung ab, um den halb eingeschlossenen Raum (83) zu bilden.

11. Motorrad gemäß zumindest einem der Ansprüche 8 bis 10, **dadurch gekennzeichnet, dass** dieses Abschirm-Element (80) zumindest eine Befestigungs-Rippe (82) beinhaltet, zum Befestigen des Abschirm-Elements (80) an dem Körper-Rahmen (71) und/oder dass dieses Abschirm-Element (80) aus Gummi gemacht ist.

12. Motorrad gemäß zumindest einem der Ansprüche 8 bis 11, **dadurch gekennzeichnet, dass** dieses Abschirm-Element (80) integral an der Seiten-Abdeckung (74) ausgebildet ist oder dass dieses Abschirm-Element (80) an der Seiten-Abdeckung (74) montiert ist nachdem es getrennt von der Seiten-Abdeckung (74) ausgebildet ist.

13. Motorrad gemäß zumindest einem der Ansprüche 8 bis 12, **dadurch gekennzeichnet, dass** ein Raum zwischen einem oberen Ende der Einlass-Leitung (32) und einer Oben-Wand des Abschirm-Elements (80) vorgesehen ist, groß genug um irgendeinen direkten Kontakt dazwischen, bewirkt durch Vibrationen oder Schläge, erzeugt durch ein Fahren des Motorrads, zu verhindern.

14. Motorrad gemäß zumindest einem der Ansprüche 1 bis 13, **dadurch gekennzeichnet, dass** die Einlass-Leitung (32), mit Bezug auf den Körper-Rahmen (71) des Motorrads, frei bewegbar ist.

## Revendications

1. Motocyclette destinée à être utilisée sur le sol, comprenant un siège (12), un moteur (72), un carter de transmission (75), un corps de châssis (71) qui s'étend longitudinalement le long du corps de la motocyclette, un amortisseur (73) et une structure d'admission d'air (30) pour le moteur (72), dans laquelle ladite structure d'admission d'air (30) est montée sur le carter de transmission (75) et comprend :
une chambre d'admission (33) ;
une chambre d'échappement (34) ;
un tuyau de connexion (35) dont une extrémité est connectée à la chambre d'échappement (34) et dont l'autre extrémité peut être connectée au moteur (72) ;
et un tuyau d'admission (32), dans laquelle le tuyau d'admission (32) est incliné vers le tuyau de connexion (35),
**caractérisée en ce qu'**un côté de la structure d'admission d'air (30) est connecté à l'amortisseur (73).

2. Motocyclette selon la revendication 1, **caractérisée par** un port de drainage (37) monté sur une partie de fond de la chambre d'admission (33).

3. Motocyclette selon la revendication 1 ou 2, **caractérisée en ce que** ladite chambre d'admission (33) comprend un plan oblique (38), de préférence sur son côté supérieur, sur lequel une première extrémité du tuyau d'admission (32) est connectée dans une direction substantiellement verticale.

4. Motocyclette selon au moins une des revendications 1 à 3, **caractérisée en ce que** ledit tuyau d'admission (32) forme une inclinaison avec le sol comprise entre 50° et 70°.

5. Motocyclette selon au moins une des revendications 1 à 4, **caractérisée en ce qu'**une deuxième extrémité dudit tuyau d'admission (32) comprend un orifice d'entrée (31) qui fait face à un côté de la structure d'admission d'air (30).

6. Motocyclette selon la revendication 5, **caractérisée en ce que** ledit orifice d'entrée (31) présente une forme ovale, une section du plus grand diamètre de celle-ci étant substantiellement parallèle au plan oblique (38) .

7. Motocyclette selon au moins une des revendications 1 à 6, **caractérisée par** une paroi de partition (36) qui sépare ladite chambre d'admission (33) de ladite chambre d'échappement (34) et/ou un filtre à air (39) pourvu entre ledit tuyau d'admission (32) et ledit tuyau de connexion (35), positionné de préférence entre ladite chambre d'admission (33) et ladite chambre d'échappement (34).

8. Motocyclette selon au moins une des revendications 1 à 7, **caractérisée par** un élément de protection (80) formant un espace semi-fermé (83) qui s'ouvre dans une direction substantiellement vers le bas de la motocyclette, dans laquelle un orifice d'entrée (31) d'un tuyau d'admission qui s'étend vers le haut (32) de la structure d'admission (30) est positionné substantiellement à l'intérieur de l'espace semi-fermé (85).

9. Motocyclette selon la revendication 8, **caractérisée en ce que** l'élément de protection (80) est positionné sous le corps de châssis (71) et/ou sous le siège (12).

10. Motocyclette selon la revendication 8 ou 9, **caractérisée par** un carénage latéral (74) situé sous le siège (12), dans laquelle l'élément de protection (80) comprend une ouverture latérale qui fait face au carénage latéral (74) et le carénage latéral (74) recouvre l'ouverture latérale pour former l'espace semi-fermé (83).

11. Motocyclette selon au moins une des revendications 8 à 10, **caractérisée en ce que** ledit élément de protection (80) comprend au moins une nervure d'attache (82) pour attacher l'élément de protection (80) au corps de châssis (71) et/ou **en ce que** ledit élément de protection (80) est constitué de caoutchouc.

12. Motocyclette selon au moins une des revendications 8 à 11, **caractérisée en ce que** ledit élément de protection (80) est formé intégralement sur le carénage latéral (74) ou **en ce que** ledit élément de protection (80) est monté sur le carénage latéral (74) après qu'il soit formé séparément du carénage latéral (74).

13. Motocyclette selon au moins une des revendications 8 à 12, **caractérisée en ce qu'**un espace est pourvu entre une extrémité supérieure du tuyau d'admission (32) et une paroi supérieure de l'élément de protection (80), suffisamment grand pour éviter tout contact direct entre eux provoqué par des vibrations ou des chocs générés durant le fonctionnement de la motocyclette.

14. Motocyclette selon au moins une des revendications 1 à 13, **caractérisée en ce que** le tuyau d'admission (32) est librement mobile par rapport au corps de châssis (71) de la motocyclette.
